# EUROPEAN PATENT SPECIFICATION

(11) **EP 2 635 088 B1**
(45) Date of publication and mention of the grant of the patent: **12.04.2017**
(21) Application number: 12306010.5
(22) Date of filing: 20.08.2012
(51) Int. Cl.: H04L 5/00, H04L 25/02, H04W 72/04, H04B 7/02, H04W 88/08

(54) **Apparatus, Method and Computer Program for Controlling Transmission Points in a Mobile Communication System**
Vorrichtung, Verfahren und Computerprogramm zur Steuerung von Übertragungspunkten in einem mobilen Kommunikationssystem
Appareil, procédé et programme informatique pour contrôler des points de transmission dans un système de communication mobile

(30) Priority: 28.02.2012 EP 12305240
(43) Date of publication of application: 04.09.2013
(73) Proprietor: ALCATEL LUCENT, 92100 Boulogne-Billancourt (FR)
(72) Inventor: Boccardi, Federico, 20063 Cernusco Sul Naviglio (MI) (IT); Doetsch, Uwe, 74392 Freudental (DE)
(74) Representative: Wetzel, Emmanuelle

(56) References cited:
- EP-A1- 1 739 852
- WO-A2-2010/081166
- BRUNO CLERCKX ET AL: "Coordinated multi-point transmission in heterogeneous networks: A distributed antenna system approach", CIRCUITS AND SYSTEMS (MWSCAS), 2011 IEEE 54TH INTERNATIONAL MIDWEST SYMPOSIUM ON, IEEE, 7 August 2011 (2011-08-07), pages 1-4, XP031941570, DOI: 10.1109/MWSCAS.2011.6026627 ISBN: 978-1-61284-856-3
- CHRISTOPH A JOTTEN ET AL: "Performance Evaluation of Multicast/Broadcast Single Frequency Network Operation for WCDMA", SPREAD SPECTRUM TECHNIQUES AND APPLICATIONS, 2008. ISSSTA '08. IEEE 10TH INTERNATIONAL SYMPOSIUM ON, IEEE, PISCATAWAY, NJ, USA, 25 August 2008 (2008-08-25), pages 79-84, XP031318987, ISBN: 978-1-4244-2203-6
- STEFAN BRUECK ET AL: "Centralized scheduling for joint transmission coordinated multi-point in LTE-Advanced", SMART ANTENNAS (WSA), 2010 INTERNATIONAL ITG WORKSHOP ON, IEEE, PISCATAWAY, NJ, USA, 23 February 2010 (2010-02-23), pages 177-184, XP031663710, ISBN: 978-1-4244-6070-0
- HOON HUH ET AL: "Multi-Cell MIMO Downlink With Cell Cooperation and Fair Scheduling: A Large-System Limit Analysis", IEEE TRANSACTIONS ON INFORMATION THEORY, IEEE PRESS, USA, vol. 57, no. 12, 1 December 2011 (2011-12-01), pages 7771-7786, XP011389096, ISSN: 0018-9448, DOI: 10.1109/TIT.2011.2170123
- RALF WEBER ET AL: "Self-Organizing Adaptive Clustering for Cooperative Multipoint Transmission", VEHICULAR TECHNOLOGY CONFERENCE (VTC SPRING), 2011 IEEE 73RD, IEEE, 15 May 2011 (2011-05-15), pages 1-5, XP031896890, DOI: 10.1109/VETECS.2011.5956490 ISBN: 978-1-4244-8332-7

## Description

Embodiments of the present invention relate to communication networks, more particularly but not exclusively to resource allocation in mobile communication networks.

### Background

Demands for higher data rates for mobile services are steadily increasing. At the same time modem mobile communication systems as 3rd Generation systems (3G) and 4th Generation systems (4G) provide enhanced technologies, which enable higher spectral efficiencies and allow for higher data rates and cell capacities. As operators are seeking to extend the coverage and capacity of their networks advanced transmission concepts are one way forward.

Some of these advanced transmission concepts may include joint user scheduling, i.e. users or mobile transceivers of a communication network are jointly scheduled for data transmission and/or reception. Cell clustering is another concept wherein cells are grouped or clustered for simultaneous transmission to a mobile transceiver, which may then take advantage of diversity and combining gains. Moreover, advanced antenna concepts, such as beamforming and Multiple-Input-Multiple-Output (MIMO) transmission, may use precoding coefficient calculation methods, which consider multiple transceivers. In some concepts a central logical entity may jointly form clusters of coordinated cells, select users and calculate beamforming coefficients and power allocations.

B. Clerckx et al, "Coordinated multi-point transmission in heterogeneous networks: A distributed antenna system approach", considers frequency reuse approaching one and networks becoming more and more heterogeneous such that cooperative multi-point MIMO has become a key candidate technology in the design of future wireless networks and is an active research topic in the academia and the industry. In 3GPP LTE-Adv. Rel. 11, a new study item on Coordinated Multi-Point transmission and reception (commonly denoted as CoMP) has been initiated in December 2010 and is expected to be one of the major features of Rel. 11. A particularly interesting deployment scenario is the Distributed Antenna System (DAS) where cooperative transmission is applied between distributed transmission points belonging to a common cell. The authors discuss the pros and cons of distributed antenna systems versus classical heterogeneous networks like picocells, the appropriate cooperative schemes and the design challenges. Benefits of such technology are confirmed through system level performance evaluations compliant with LTE-Adv.

Document EP 1 739 852 A1 discloses a MIMO method based on distributed transmission sources for transmitting a downlink data stream between M transmitting antennas and a mobile terminal having P receiving antennas, M and P>1, channels from at least two transmitting antennas to one of receiving antennas have different multipath distributions, said method comprises transmitting corresponding M substreams to the mobile terminal by using the same spreading code; estimating the multipath channel matrix; and processing the signal according to the multipath channel matrix to restore the downlink data stream, the estimating including measuring the total number of actual multipath received components having different delays in the transmitted signals; constructing the multipath channel matrix by taking the number as the multipath number, so that if the signal transmitted by one of the transmitting antennas to the receiving antenna has no multipath component corresponding to one of the delays, the channel parameter corresponding to the transmitting antenna, the receiving antenna and the delay is set as 0, the transmitting comprises adjusting the gain of said M sub-data streams based on the average signal quality measurement of uplink signals from the mobile terminal to said M transmitting antennas, so that average path losses of respective downlink channels are substantially equal.

C. A. Jötten et al, "Performance Evaluation of Multicast/Broadcast Single Frequency Network Operation for WCDMA", evaluates the system-level performance and potential capacity gain of MBSFN (Multicast/Broadcast Single Frequency Network) operation in Wideband CDMA (WCDMA) and compares it to conventional WCDMA Multimedia Broadcast/Multicast Service (MBMS) with macro-diversity combining. At a given coverage the efficiency of conventional WCDMA MBMS is limited by low SNR users, as, e.g., users located close to a cell edge, which are typically suffering from bad channel and inter-cell interference conditions. As a means to mitigate the situations of such users, MBSFN operation has recently been discussed in the standardization bodies of the Third Generation Partnership Project (3GPP) for the enhancement of MBMS. In WCDMA downlinks are considered, MBSFN operation refers to the coherent use of a single common scrambling code and the same spreading codes to simultaneously broadcast identical MBMS channels in a number of cells that form an MBMS cluster. Through this, the users receive the signals from the cluster of MBSFN cells as one single signal over a joint radio channel, which exchanges inter-cell interference by constructive multi-path signals. This can be exploited by advanced receivers to yield impressive receiver output SNR gains as compared to conventional MBMS. This paper presents an experimental evaluation of the spectral efficiencies achievable in MBSFN and conventional MBMS. The results help to assess, if it is expedient to enhance WCDMA MBMS by MBSFN.

Document WO 2010/081166A2 discloses techniques for supporting Coordinated MultiPoint (CoMP) transmission. For CoMP transmission, multiple cells may simultaneously send one or more data streams to one or more UEs on the same time-frequency resources based on short-term channel feedback from at least one UE to at least two cells. In an aspect, a semi-static configuration may be used by a set of cells for CoMP transmission to a UE. The semi-static configuration may indicate resource elements available to the set of cells to send CoMP transmission to the UE. The available resource elements may be determined based on a maximum number of TDM control symbols for all cells in the set and resource elements used for cell-specific reference signals by the cells in the set. A cell in the set may send data on the available resource elements to the UE for the CoMP transmission.

Stefan Brueck et al, "Centralized Scheduling for Joint Transmission Coordinated Multi-Point in LTE-Advanced", considers coordinated multi-point transmission/reception for LTE-Advanced as a tool to improve the coverage of high data rates, the cell-edge throughput and/or to increase the system throughput. Joint transmission schemes are an example of coordinated transmission between cells for the downlink. Here, data are transmitted simultaneously either coherently or non-coherently from multiple cells to a single mobile station. In this paper, a centralized MAC scheduling approach for joint transmission coordinated multi-point (JTCoMP) is proposed. Since several base stations transmit jointly to a single mobile station, the base stations are grouped together in so-called clusters. Several cluster strategies are investigated as well. The focus is on schemes that add only low complexity to the existing 3GPP LTE Release 8 system. Simulation results are provided for non-coherent transmission for full buffer and bursty traffic models with various system loads for different static cell clustering approaches.

Hoon Huh et al, "Multi-Cell MIMO Downlink with Cell Cooperation and Fair Scheduling: a Large-System Limit Analysis", considers the downlink of a cellular network with multiple cells and multi-antenna base stations, including a realistic distance-dependent pathloss model, clusters of cooperating cells, and general "fairness" requirements. Beyond Monte Carlo simulation, no efficient computation method to evaluate the ergodic throughput of such systems has been presented so far. The authors propose an analytic solution based on the combination of large random matrix results and convex optimization. The proposed method is computationally much more efficient than Monte Carlo simulation and provides surprisingly accurate approximations for the actual finite-dimensional systems, even for a small number of users and base station antennas. Numerical examples include 2-cell linear and three-sectored 7-cell planar layouts, with no inter-cell cooperation, sector cooperation, or full inter-cell cooperation.

Ralf Weber et al, "Self-Organizing Adaptive Clustering for Cooperative Multipoint Transmission", considers Coordinated Multipoint (CoMP) transmission technique as one method to improve performance of cellular wireless systems, e.g. LTE Advanced, by cooperation of cells for reducing interference and increasing SINR of users in weak radio conditions, e.g. located at cell edge. In this paper, the authors present an adaptive clustering algorithm to dynamically adjust the cooperation sets of a CoMP system to the UE perceived signal strength in order to maximize the overall system performance while avoiding major system architecture modifications. The authors show that additional gain in SINR could be achieved compared to non UE-aware fixed cluster with limited increase of system complexity, for a practical adaptive CoMP clustering scheme performing not far from an upper bound UE-specific scheme.

### Summary

Examples are based on the finding that advanced transmission concepts can be combined with cloud architectures. For example, a Radio Access Network (RAN) of a mobile communication system may be implemented as a Cloud-RAN (C-RAN). In a C-RAN advantage may be taken of cloud computing, i.e. processing resources are provided at centralized network entities and radio front ends are provided as remote units or transmission points. The transmission points can be coupled with the central units comprising the processing resources using high capacity data lines, such as optical fiber. The processing resources at the centralized network entity are also referred to as Base Band Units (BBU) or base band processing units. The Transmission Points (TPs) comprise the radio front ends and may operate one or more antennas for transmitting and receiving radio signals.

It is another finding that different TPs connected to a Central Unit (CU) can be grouped into clusters and each cluster can be dynamically mapped to a set of processing resources into the network. The same TP can belong to different clusters, and therefore the signal received by a TP can be routed to different processing resources within the network (equivalently for the signal transmitted). More details can be found in European patent application no. EP12305240.9. It is a further finding that TP clusters can be efficiently created without introducing a too high computational complexity and a too high signaling overhead in the air-interface.

According to another finding the problem of TP clustering is connected to the problem of user scheduling, multi-antenna transmit/receive beamforming and power control. Therefore an optimal solution of this problem would require a joint optimal solution of different sub-problems at different levels of the protocol stack. Therefore, in literature the joint problem is usually decomposed in different sub-problems, one of which being dynamic clustering.

In "A Framework for Optimizing the Uplink Performance of Distributed Antenna Systems under a Constrained Backhaul", P. Marsch and G. Fettweis, in Proc. Of ICC Apr. 2007, and P. Marsch and G. Fettweis, "A Framework for Optimizing the Downlink Performance of Distributed Antenna Systems under a Constrained Backhaul", in Proc. of EW, Apr. 2007, the authors consider an approach for uplink and downlink transmissions such that the users are divided in groups using orthogonal resources. Joint detection can be used between users belonging to the same group. Weak users (i.e. users at the edge of the cells) can be grouped together and the TP coordination may be realized starting from the weak users until the constraint on the backhaul is achieved. The grouping can be realized considering only average channel state information, without exploiting instantaneous dynamics of the channel.

S. Venkatesan, "Coordinating base stations for grater uplink spectral efficiency in a cellular systems", in Proc. of PIMRC, Sept. 2007 presents a TP selection algorithm that refers to the uplink problem. The goal is to minimize the power in order to achieve an equal-rate requirement. Power allocation, receive (linear) beamforming and cluster assignment are jointly realized using an extension of the algorithm proposed by F. Rashid-Farrokhi, L. Tassiulas and K. J. R. Liu in "Joint optimal power control and beamforming in wireless networks using antenna arrays", IEEE Trans. Commun., vol. 46, pp. 1313-1324, Oct. 1998. A limitation of this work is the lack of diversity with respect to changing channel conditions.

In A. Papadogiannis, D. Gesbert and E. Hardouin, "A dynamic clustering approach in wireless networks with multi-cell cooperative processing", in Proc. of ICC 08, a dynamic clustering technique is considered for uplink transmissions in order to maximize the weighted sum-rate. At each time slot one user per cell is selected using round robin scheduling. At that time slot and for those specific selected users the algorithm chooses the best bases in order to serve those users using joint combining.

Document WO 2010/016865 A1 discloses an approach where clustering and user scheduling are solved jointly in order to maximize a common metric. Current solutions for dynamic TP clustering are still unpractical because of their complexity. One problem is feedback overhead that comes along with conventional concepts. As a matter of fact, to jointly create the optimal clustering and schedule a convenient set of users, the logical central unit in charge of the process should use the Channel State Information (CSI) from each TP to each user. While in an uplink Time Division Duplex/Frequency Division Duplex (TDD/FDD) and downlink TDD system this can be feasible, assuming properly designed reference signals, in a downlink FDD system it requires a large feedback overhead. Each UE should send multiple pieces of feedback information for each candidate TP point. For example, assuming a feedback mechanism built on the Precoding Matrix Index (PMI)/ Channel Quality Information (CQI)/ Rate Information (RI) structure used in Long Term Evolution (LTE), a natural enabler for dynamic clustering would involve sending a triple PMI/CQI/RI for each TP, plus some feedback signaling for the phase difference between different TPs, plus CQI and RI information about the joint channel between different TPs.

Based on another finding another problem is computational complexity. As a matter of fact jointly solving clustering and scheduling would require the solution of unpractical full-search algorithms. Even greedy-search based suboptimal algorithms would still be demanding from a computational complexity point of view, as shown in WO 2010/016865 A1. Based on these findings embodiments may provide a reduction in computational complexity and/or a lowering feedback overhead.

Embodiments are further based on the finding that clusters of TPs can use a common reference signal, i.e. a reference signal, which is common to the TPs of said cluster. In other words, the TPs of one cluster use the same common reference signal. The TPs of the cluster may further use the same cell identification such that they may appear as a single cell to a mobile. In other words, embodiments may randomly generate sets of clusters of transmission points and transmit per cluster reference signals. This operation may also be referred to as cluster scheduling. For each scheduled set of clusters a feedback from each user may be collected and the best user may be scheduled, according to a certain metric. Embodiments may therewith differ from previous proposals further in that reference signals can be sent per cluster and not per transmission point. In the same way, feedback can be received per-cluster and not per transmission point. Another difference is the mechanism used at the central unit to generate clusters. While previous proposals use a mechanism for relying on the feedback received at each TP to group TPs, embodiments may use different mechanisms to form a cluster.

Embodiments provide an apparatus for controlling transmission points in a mobile communication system, i.e. embodiments may provide said apparatus to be operated by or included in a base station transceiver or a network entity. The mobile communication system may, for example, correspond to one of the mobile communication systems standardized by the 3^{rd} Generation Partnership Project (3GPP), as Global System for Mobile Communications (GSM), Enhanced Data rates for GSM Evolution (EDGE), GSM EDGE Radio Access Network (GERAN), Universal Terrestrial Radio Access Network (UTRAN) or Evolved UTRAN (E-UTRAN), Long Term Evolution (LTE) or LTE-Advanced (LTE-A), or mobile communication systems with different standards, e.g. Worldwide Interoperability for Microwave Access (WIMAX) IEEE 802.16 or Wireless Local Area Network (WLAN) IEEE 802.11, generally any system based on Time Division Multiple Access (TDMA), Frequency Division Multiple Access (FDMA), Orthogonal Frequency Division Multiple Access (OFDMA), Code Division Multiple Access (CDMA), etc. In the following the terms mobile communication system and mobile communication network are used synonymously.

The mobile communication system comprises a plurality of transmission points operable to communicate radio signals with a mobile transceiver. In embodiments, the mobile communication system may comprise mobile transceivers and base station transceivers. A mobile transceiver may correspond to a smartphone, a cell phone, user equipment, a laptop, a notebook, a personal computer, a Personal Digital Assistant (PDA), an Universal Serial Bus (USB) -stick, a car, etc. A mobile transceiver may also be referred to as User Equipment (UE) or user in line with the 3GPP terminology. A base station transceiver can be located in the fixed or stationary part of the network or system. A base station transceiver may correspond to a remote radio head, a transmission point, an access point, a macro cell, a small cell, a micro cell, a femto cell, a metro cell etc. A base station transceiver can be a wireless interface of a wired network, which enables transmission of radio signals to a UE or mobile transceiver. Such a radio signal may comply with radio signals as, for example, standardized by 3GPP or, generally, in line with one or more of the above listed systems. Thus, a base station transceiver may correspond to a NodeB, an eNodeB, a BTS, an access point, etc.

The mobile communication system comprises a plurality of transmission points operable to communicate radio signals with a mobile transceiver. Moreover, the mobile communication system comprises a plurality of processing resources operable to process the radio signals communicated with the mobile transceiver. The apparatus comprises means for forming a cluster of transmission points, the cluster of transmission points comprising multiple transmission points, each of which use a common reference signal.

In examples the common reference signal may be established by precoded reference signals transmitted by the TPs of a cluster. In other words the references symbols which are transmitted by the TPs of a cluster may be precoded in that phase adjustments or amplitude adjustments or both are carried out at one or more TPs of the cluster. Moreover, it is assumed that the TPs of one cluster are synchronized to a certain extent. In some embodiments the TPs selected for a cluster transmit the same reference signals in a synchronized, i.e. slot synchronized, manner. Whether these signals superimpose coherently at a mobile transceiver then depends on the individual radio channels between each of the TPs and the respective mobile. For example, a TP may correspond to a certain first antenna of a first base station and it may be combined with another antenna of another base station to form a cluster. Throughout the coverage area of the so-formed cluster opportunistic beamforming may be established, meaning that at some locations the signals of the TPs may superimpose coherently and at other locations they may superimpose incoherently. Subsequent scheduling can take advantage of this opportunistic beamforming.

In some examples, precoding weights are calculated based on channel prediction for the cluster. Such channel prediction may in some embodiments be based on channel statistics, channel data history, etc. The TPs may then send precoded pilots or reference symbols. Based on the precoded pilots the UE may measure or estimate the joint radio channel as if it was established by a single TP only. Accordingly, the mobile transceiver may provide information on the channel quality as in a single TP case, e.g. in terms of Channel Quality Information (CQI) channel feedback to the TP(s). In return the apparatus may schedule the TPC and therewith the mobile transceiver based on the feedback information on the joint or common radio channel. The TPC may send precoded pilots and data together.

In further examples the transmission points of the cluster may use a same cell identification. In some examples such a same cell identification may be established by the common reference signal, which will be described in more detail subsequently. The means for forming can correspond to a cluster former, i.e. a device or an entity to form a group of TPs to form a cluster. Such a cluster former may be established using a processor, a controller or other hardware, which is capable of executing a corresponding computer program. In further embodiments optimization techniques may be used to schedule the set of TPs to form a cluster, to which is also referred as TP Cluster (TPC).

The mobile transceiver can be associated with the TPC, which may establish a TPC-cell. A TPC-cell may differ from a conventional cell, the TPC-cell may be established by multiple TPs. The term cell refers to a coverage area of radio services provided by a TPC, a TP, a base station transceiver or a NodeB, an eNodeB, respectively. In some embodiments a cell may correspond to a sector. For example, sectors can be achieved using sector antennas, which provide a characteristic for covering an angular section around a TP or base station transceiver. In some embodiments, a TP may, for example, operate three or six cells covering sectors of 120° (in case of three cells), 60° (in case of six cells) respectively. A mobile transceiver can be registered or associated with a cell, i.e. it can be associated to a cell such that data can be exchanged between the network and the mobile in the coverage area of the associated cell using a dedicated channel, link or connection. The means for forming can be operable to allocate one or more cell identifications of cells of the mobile communication system to a TP and one cell identification to a TPC.

A cell is thus operated by one or more TPs and can be seen as a coverage area, which can be identified through reference or broadcast channels with a respective identification, as, for example, a pilot channel. Before a mobile transceiver can transmit payload data to a cell, it has to register, associate or connect with a cell. A mobile transceiver not registered with a cell is in a so called idle mode, a registered mobile transceiver is in active or connected mode. One prominent protocol of the 3GPP specifications is the Radio Resource Control (RRC) protocol, cf. Technical Specification (TS) 25.331 / 36.331 series of 3GPP specifications. RRC specifies multiple procedures for radio resource management of a mobile transceiver, as handover signaling, measurement configuration, cell reselection, reconfiguration, etc. Once a mobile transceiver has established an RRC connection to the respective network entity, e. g. a TP, a NodeB, a Radio Network Controller (RNC), an eNodeB, etc., the network entity can trigger the respective procedures, which is why an associated mobile transceiver is also be referred to as in RRC connected mode when associated to a TP.

In further embodiments the apparatus can be operable to control the transmission points such that the transmission points are operable to indicate their cell identification using a scrambling code for transmitting a broadcast signal, i.e. the TPs use the same scrambling code. In other examples the same cell ID may be provided using other techniques, such as transmission of identical cell identification information on respective system information or broadcast channels. In some embodiments the apparatus can be further operable to control the transmission points such that transmission points appear as one radio cell to a mobile transceiver. In other words, the apparatus may control the transmission points of a cluster such that the transmission points appear to a mobile within the coverage area of the cluster as a single radio cell. Such control may involve using one and the same cell identification for the TPs of the cluster, certain synchronization needs between the TPs of the cluster, and/or using common reference signals in the cluster.

In some embodiments the apparatus can be further operable to control the transmission points such that transmission points provide the common reference signal. The common reference signal can be such that a joint radio channel, being established between the transmission points of the cluster and a mobile transceiver, is measurable based on the common reference signal by the mobile transceiver. Hence, the TPs of the cluster may provide a common reference signal, e.g. a pilot signal or channel, which is synchronized to a certain extent. The mobile transceiver can then receive said common reference signal and measure or estimate a common radio channel of the TPs of the cluster. The common reference signal may correspond to a cell-specific reference signal or a demodulation reference signal. For example, in an LTE network, in order to allow for coherent demodulation and channel estimation at the mobile, reference symbols or pilot symbols are used in the OFDM time-frequency grid.

Downlink reference symbols can be inserted with a certain spacing in the time domain, e.g. in the first and third last OFDM symbol of each slot, and with a frequency domain spacing, e.g. every certain number of sub-carriers such as every sixth sub-carrier. The mobile transceiver may then interpolate over multiple reference symbols to estimate the channel. The reference symbols may be complex valued and they may be determined according to the symbol position as well as according to the cell. LTE specifications refer to this as a two-dimensional reference-signal sequence, which indicates the LTE cell identity. There are 510 reference signal sequences corresponding to 510 different cell identities. The reference signals are derived from the product of a two-dimensional pseudo-random sequence and a two-dimensional orthogonal sequence. There are 170 different pseudo-random sequences corresponding to 170 cell-identity groups, and three orthogonal sequences each corresponding to a specific cell identity within the cell identity group.

For example, different Reference Signal (RS) paradigms may be used in embodiments such as Cell- specific RS (CRS) or user-specific RS. Such a choice may depend on multi-antenna techniques to be used, such as Multi-User MIMO (MU-MIMO) and Cooperative MultiPoint(CoMP) transmission, for which considerable flexibility in determining precoders is needed to limit interference between co-scheduled users. The user-specific RS may offer an advantage in that respect by providing the TPC with complete freedom in determining a precoder for the data transmission to a user as long as the same precoder is used for the user-specific RS and the data within a scheduling unit. The way the transmission is performed hence becomes transparent from a user point of view, offering flexibility to even transmit signals from two widely separated sites (i.e. CoMP) without the user needing to be aware of it.

Some embodiments may comply with LTE Release 10 RS, which is based on separate RS for demodulation and CSI feedback. The user-specific RS, also called DeModulation Reference Signal (DMRS), can be used for demodulation, while channel estimation measurements for determining user CSI feedback can be performed on so-called Channel State Information Reference Signals (CSI-RS) typically shared by all users in the cell. One reason for introducing such a dual-RS concept may be to exploit that demodulation typically requires much more accurate channel estimates than the estimates needed for CSI feedback. There can consequently be a difference in density between the DMRS and CSI-RS, which balances the signaling overhead by exploiting the fact that the transmission rank to a user is never higher, and is typically much lower than the number of transmit antennas.

In embodiments, the apparatus can be further operable to receive information on a channel quality on the joint radio channel from the mobile transceiver. In other words, the mobile transceiver may measure or estimate the downlink radio channel based on the common or joined reference signal of the TPs of the cluster. For example, CQI may then be provided regarding the joined or common radio channel of the cluster. The apparatus can be further operable to schedule the mobile transceiver for data transmission between the mobile transceiver and the cluster of transmission points based on the information on the channel quality of the joint radio channel. Hence, once the joint radio channel is established and measured or reported by the mobile transceiver, information on the quality of the joint radio channel can be used in a scheduling decision for the mobile transceiver.

In embodiments the means for forming the cluster of transmission points can be operable for randomly selecting the transmission points for the cluster. In other embodiments the means for forming the cluster of transmission points can be operable to select the transmission points for the cluster based on information on a performance of one or more clusters, which had been formed in the past. Hence, a history of data or statistics of former clusters may be evaluated to enable decisions on formations of present and/or future clusters. The means for forming can be operable to store information on a radio channel statistic for a cluster. That is to say that based on radio channel statistics of clusters, which have been formed in the past, and especially of the joint radio channels these clusters provided, present or future clusters can be formed. The means for forming can be operable to store information on a performance of the mobile transceiver for different clusters.

In other words, statistics on past TP cluster scheduling could be used to weigh differently the selection of one TP cluster over another. Moreover, genetic optimization techniques could be used to evolve the cluster selection in a way to match changes in the network. Furthermore, in some embodiments, the means for forming can be operable to store information on a performance of the mobile transceiver for different clusters. For example, data rate information may be stored as a performance measure of a mobile for a certain cluster. Other performance measures, which may be evaluated in embodiments, are Bit or Block Error Rates (BER), Frame Error Rates (FER), a number of retransmissions, packet delays etc. In embodiments the apparatus can be further operable to control the transmission points such that the transmission points of the cluster are operable to communicate jointly with a mobile transceiver. That is to say that the signals communicated between the transmission points of the cluster and the mobile transceiver can be processed jointly.

In some examples a separated protocol stack is implemented for each cell of the mobile communication system. Furthermore, using such architecture a joint reception (transmission) from multiple TPs can involve the signal of a given user or mobile transceiver to be decoded by different BBUs over different protocol stacks. The apparatus for controlling transmission points may comprise means for forming/dynamically allocating a cluster of transmission points for joint communication with the mobile transceiver to a set of processing resources to commonly process the radio signals communicated with the mobile transceiver, the cluster of transmission points corresponding to one or more transmission points. In examples a cluster may comprise a set of two or more transmission points. The means for dynamically allocating may correspond to an allocator, i.e. a device which is operable to allocate the resources. In examples the means for allocating may be implemented as a processor or a controller or any hardware, which is operable to execute an according computer program.

That is to say, the apparatus may assign processing resources to a cluster of transmission points. The cluster of transmission points can be formed to communicate jointly with a mobile transceiver, i.e. the transmission points of the cluster transmit cooperatively to the mobile transceiver. Moreover, the cluster of transmission points is associated to processing resources, which process the signals communicated with the mobile transceiver. In embodiments a transmission point may comprise a radio front end and the plurality of transmission points, i.e. a cluster, may establish a radio coverage structure, which may be cellular in some embodiments, for communicating the radio signals with the mobile transceiver. The plurality of processing resources can be located at a central base band processing unit, which is coupled to the plurality of transmission points.

Examples may enable dynamic Cooperative MultiPoint (CoMP) coordination between different transmissions points connected to the same C-RAN base band pool, wherein the base band pool comprises the respective processing resources. In examples the means for dynamically allocating can be operable to allocate the set of processing resources to process at least a part of a common base band protocol stack of the cluster of transmission points for the mobile transceiver. In other examples the common base band protocol stack of the cluster may be processed by the set of processing resources. In other words, the dynamic allocation may allow gathering all TP, which participate in a CoMP transmission to a certain user, in a cluster, which can be commonly processed by the same resources and therefore suffices a single protocol stack.

TPs can be grouped in clusters, and a given TP can belong to different clusters. That is to say, the means for forming can be operable to allocate at least one transmission point to at least two different clusters of transmission points such that the at least two different clusters of transmission points are operable to communicate with at least two mobile transceivers. The means for forming can further be operable to allocate at least one transmission point to at least two different sets of processing resources. The means for forming can further be operable to allocate two different clusters of transmission points to the same set of processing resources for joint communication to at least two mobile transceivers. That is to say, the same processing resources can also be allocated to different clusters.

In embodiments the clusters can be UE-specific and can be dynamically formed as a function of the users or mobile transceivers to be scheduled. The mean for forming may further be operable to determine the cluster of transmission points for jointly communicating with the mobile transceiver based on radio conditions specific to the mobile transceiver. That is to say, the means for determining may be operable to receive feedback information from the mobile transceiver and may determine the transmission points for the cluster based on the feedback information. In embodiments, such feedback information may comprise parameters or measurement results like channel state information, channel quality indicator, buffer status and so on.

In examples the means for forming can be operable to allocate virtual resources of a centralized base band processing unit to the cluster of transmission points. That is to say, virtualization techniques may be used in order to dynamically allocate clusters to hardware resources, which may, for example, be in charge of the Base Band (BB) processing. In other words, examples may therewith not need to statically allocate HW resources to a given cluster. Therefore joint processing within a set of transmission points may be realized just by activating an instantiation of a virtual base band chain and by allocating it to a proper set of hardware resources in the pool. Hence, a centralized BB processing pool may be available, such as a cloud of processors, a farm of processors, etc. The processing hardware may be subdivided in virtual resources such as processes, threads, etc. The virtual resources can then be allocated to the cluster, where the cluster size and the transmission scheme, the data rate, the number of radio bearers etc. may determine how many of the processing resources are needed for a particular cluster, user, respectively.

In examples architecture may be used, in which the concept of 'cell' is redefined and replaced by the concept of clusters. It is a further finding of examples that the processing resources can be dynamically allocated to sets of transmission points or clusters. These processing resources can be used for jointly transmitting to (or receiving from) a given set of users, i.e. one or more mobile transceivers.

In examples a given TP can be dynamically allowed to be associated to different TP sets and can be accordingly dynamically allocated to different sets of processing resources. In other words, processing resources can be dynamically allocated to the pool or CoMP clusters, in a way proportional to the cluster's load. Examples may therewith drop the concept of "anchor" TP as from today's 3GPP Release 10 LTE. Examples may redefine the pilot structure in a way that the UE may not distinguish between the different TPs. In other words, the means for dynamically allocating can be operable to provide an identification to the cluster of transmission points such that the transmission points of the cluster appear with the same identification to the mobile transceiver. In some examples the cell as the elementary processing unit may be dropped and replaced by a Transmission Point Cluster (TPC), i.e. the set of TPs jointly serving a user or a set of users. A TP may belong to multiple TPC clusters. That is to say, different users or mobile transceivers can be served by different TPC, where the TPC may not differ in all TPs belonging to them, some TP can belong to multiple TPC. Hence, the means for forming can be operable to provide at least two different identifications to a TP, which belongs to at least two clusters of TPs. The identification may correspond to information on a scrambling sequence used for a pilot signal broadcast by a TP. In embodiments, a mobile transceiver apparatus can be associated to a TP, a TPC, or a base station transceiver, which can be composed of at least one TP and corresponding BB processing resources.

Embodiments further provide a method for controlling transmission points in a mobile communication system. The mobile communication system comprises a plurality of transmission points operable to communicate radio signals with a mobile transceiver. The method comprises forming a cluster of transmission points. The cluster of transmission points comprises multiple transmission points the transmission points of the cluster using a common reference signal.

Embodiments further provide a computer program having a program code for performing one of the above methods, when the computer program is executed on a computer or processor.

Examples may provide the advantage that a signaling reduction can achieved compared to conventional concepts, where a mobile transceiver may send multiple Channel Direction Indication (CDI) feedbacks, e.g. one for each TP in a TPC. For example, with two candidate TPs for serving a given UE, the UE may send a feedback for the first TP, a feedback for the second TP and a feedback for the joint channel assuming the two TPs transmitting together. Moreover, the two TPs may transmit with different reference signal sequences, to allow the estimation of two separated channels.

Examples may reduce the signaling overhead by relying on per cluster feedback and per-cluster reference signals.

Moreover, examples may reduce the computational complexity of cluster forming.

Examples may decouple the tasks of user scheduling and clustering, while maintaining the benefit of opportunistically scheduling a good set of users for a given cluster set.

### Brief description of the Figures

Some other features or aspects will be described using the following non-limiting embodiments of apparatuses and/or methods and/or computer programs by way of example only, and with reference to the accompanying figures, in which
Fig. 1 illustrates an embodiment of an apparatus for controlling transmission points;
Fig. 2 illustrates a communication network with multiple TPs as an embodiment; and
Fig. 3 shows a block diagram of an embodiment of a method for controlling.

### Description of some Embodiments

Various embodiments will now be described in more detail with reference to the accompanying drawings. In the figures, the thicknesses of lines, layers and/or regions may be exaggerated for clarity.

Accordingly, while embodiments are capable of various modifications and alternative forms, embodiments thereof are shown by way of example in the figures and will herein be described in detail. It should be understood, however, that there is no intent to limit embodiments to the particular forms disclosed, but on the contrary, embodiments are to cover all modifications, equivalents, and alternatives falling within the scope of the invention. Like numbers refer to like or similar elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

Unless otherwise defined, all terms (including technical and scientific terms) used herein have the same meaning as commonly understood by one of ordinary skill in the art to which embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

In the following description some components will be displayed in multiple figures carrying the same reference signs, but may not be described multiple times in detail. A detailed description of a component may then apply to that component for all its occurrences.

Realizing a dynamic resource allocation in real worlds systems, may involve modifying the assumption of the existence of a central unit in charge of channel estimation, detection, scheduling, etc. A distributed implementation, where the logical functions carried out in a CoMP box are distributed between different boards could be assumed. However, this distribution of the CoMP functions may involve a latency that may not always be sustainable.

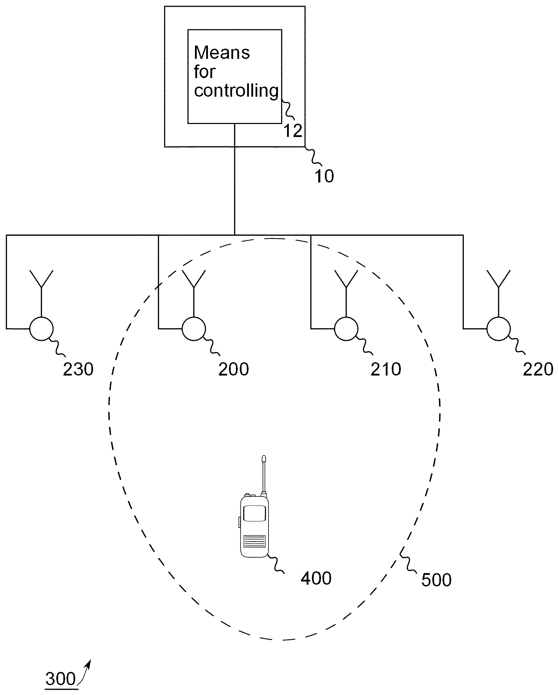

Fig. 1 illustrates an embodiment of an apparatus 10 for controlling transmission points 200; 210, 220, 230 in a mobile communication system 300. The mobile communication system 300 comprises a plurality of transmission points 200, 210, 220, 230 operable to communicate radio signals with a mobile transceiver 400. The apparatus 10 comprises means for forming 12 a cluster 500 of transmission points. The cluster 500 of transmission points comprising multiple transmission points 200, 210, each of which uses a common reference signal. It is to be noted that the common reference signal is common to the TPs 200, 210 of the cluster 500. In other words TPs 200, 210 provide the same reference signal. The transmission points 200, 210 of the cluster 500 use a same cell identification. It is to be noted that the cluster 500, comprising the TPs 200 and 210, is to be understood as an example embodiment, a cluster may comprise one or more TPs. In the embodiment shown in Fig. 1 the apparatus 10 is operable to control the transmission points 200, 210 such that the transmission points 200, 210 are operable to indicate their cell identification using a same scrambling code for transmitting a broadcast signal. The apparatus 10 is operable to control the transmission points 200, 210 such that the transmission points 200, 210 appear as one radio cell to the mobile transceiver 400.

In the embodiment a random clustering is carried out. The principle of random clustering can be summarized as follows:
1. The apparatus 10 creates some random cluster 500. That is to say, the means for forming 12 the cluster 500 of transmission points 200, 210 is operable to randomly select the transmission points 200, 210 for the cluster 500.
2. Reference signals are sent through the different TPs 200, 210 of the cluster 500 as in step 1. That is to say the apparatus 10 is further operable to control the transmission points 200, 210 such that the transmission points 200, 210 provide a common reference signal such that a joint radio channel, being established between the transmission points 200, 210 of the cluster 500 and the mobile transceiver 400, is measurable based on the common reference signal by the mobile transceiver 400.
3. Feedback is received from the users, i.e. mobile 400, about the set of random TPs 200, 210 in the cluster 500 as from step 1 above. That is to say, the apparatus 10 is further operable to receive information on a channel quality on the joint radio channel from the mobile transceiver 400.
4. The apparatus 10 schedules the users with highest weighted (weighted for example by the proportional fair coefficients) rate. That is to say the apparatus 10 is further operable to schedule the mobile transceiver 400 for data transmission between the mobile transceiver 400 and the cluster 500 of transmission points 200, 210 based on the information on the channel quality of the joint radio channel.

Examples may generate some artificial fast-fading, e.g. by the use of opportunistic beamforming, with a very low amount of feedback, e.g. only a Signal-to-Interference-and-Noise Ratio (SINR) report. Examples may be extended in order to use some predefined sets of TPs rather than randomly selected TPs.

In the embodiment depicted in Fig. 1 the common reference signal corresponds to a Cell-Specific Reference Signal (CS-RS) or a DeModulation Reference Signal (DMRS). Embodiments may to apply this principle to multiple clusters. In order explain the concept some preliminary definitions are given.

A cluster 500 or TP cluster 500 is a subset a subset of TPs 200, 210 cooperating for transmission and/or reception. Scheduling a set of clusters refers to the process of selecting a set of TP clusters for transmission/reception over the same time/frequency/space resource, such that TPs 200, 210 within the same cluster 500 use joint transmission or reception. The apparatus 10 is further operable to control the transmission points 200, 210 such that the transmission points 200, 210 of the cluster 500 are operable to communicate jointly with the mobile transceiver 400. The signals communicated between the transmission points 200, 210 of the cluster 500 and the mobile transceiver 400 are processed jointly.

Cluster 500 scheduling is tightly connected to user 400 scheduling, i.e. the choice of the TPs 200, 210 to group in clusters 500 is connected to the users 400 scheduled for transmission within these clusters 500.

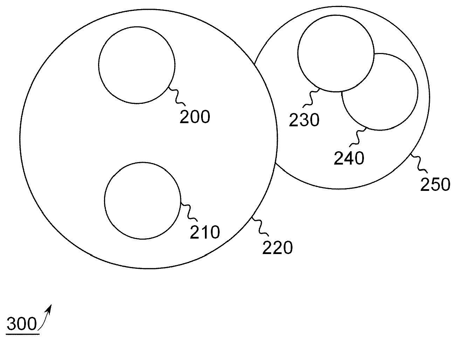

Fig. 2 illustrates a communication network 300 with multiple TPs 200, 210, 220, 230, 240, and 250 as an embodiment. Fig. 2 shows the coverage area of the TPs as a representation of the TPs themselves. The apparatus 10 as described above may be comprised in any one of the TPs. In some embodiments the apparatus 10 can be located at a central unit, which is coupled to the TPs. In other embodiments an apparatus 10 may be comprised in multiple TPs or even in all TPs. Fig. 2 illustrates the coverage areas 200, 210, 220, 230, 240, and 250 as being overlapping and of different sizes. The communication network 300 can be seen as a Heterogeneous Network (HetNet) having TPs with different coverage areas.

In the following TPs of the same cluster are indicated between "[ ]". Moreover, a set of clusters scheduled for transmission is indicated in between "{}".

For example, referring to Fig. 2, the following clusters could be built containing TP 200: [200], [200, 220], [200, 210, 220], ....

Cluster [200, 220] could be scheduled as
{[200, 220], [210], [230, 240, 250]}
or
{[200, 220], [210], [230, 250]},
where the latter cluster scheduling implies that TP 240 has been turned OFF.

The procedure of the embodiment of an LTE communication network 300 can be summarized as follows:
1. The apparatus 10 is assumed to be located at a central unit. The logical unit with the apparatus 10 generates clusters of TPs and schedules them for transmission. In other words the central unit randomly groups some clusters of TPs for transmission. Joint processing is carried out within each cluster.
2. For each cluster formed, reference signals are sent by each TP in the cluster. TPs belonging to the same cluster use the same scrambling sequence, in a way that a user or a mobile transceiver may be able to distinguish between them but only estimate the joint channel. For example, in Release 10 a TP belonging to the same cluster could use the same port. The term "port" may refer to physical layer interface, a virtual set of antenna, a certain weighted combination of antennas, a certain antenna identification, a combination thereof etc. The term port shall indicate that, at least to some extent, the TPs of a cluster are coordinated such that they appear as one cell to a mobile transceiver served by the cluster and joint processing of the signals transmitted and/or received is enabled.
3. The mobile transceiver sends, for example, an SINR feedback for each cluster as information on the joint radio channel established by the TPs of the cluster.
4. Based on the information on the quality of the joint radio channel, e.g. the SINR feedback, the logical central unit schedules users using the clustering as determined above.

In yet another embodiment a TP may correspond to one antenna out of multiple antennas of one or more base station transceiver. For example, four TPs, TP1, TP2, TP3, and TP4 can be defined, each corresponding to a different antenna. The different antennas can belong to different base stations. In other words, in an example embodiment the four TPs, TP1, TP2, TP3, and TP4 can be defined as each corresponding to a different antenna of a different base station transceiver.

Based on the TPs the following ports can be defined to the following clusters:
Port 1: TP1+TP2,
Port 3: TP3+TP4,
Port 5: TP1+TP3,
Port 7: TP2+TP4.

In the above example one port may correspond to one cluster. That is to say a cluster may be addressed using a certain port. The port in turn can then be used to transmit the common reference symbols.

Further embodiments may extend the above random determination of the clusters by optimizing or improving the clusters. Optimization techniques can be used to schedule the set of TP clusters. Referring to Fig. 1, the means for forming 12 the cluster of transmission points can be operable to select the transmission points 200, 210 for the cluster 500 based on information on a performance of one or more clusters which had been formed in the past. The means for forming 12 can, for example, be operable to store information on a radio channel statistic for the cluster 500. As a matter of fact, statistics on past TP cluster scheduling could be used to weigh differently the selection of one TP cluster over another. Moreover, genetic optimization techniques could be used to evolve the cluster selection in a way to match changes in the network. The means for forming 12 can be operable to store information on a performance of the mobile transceiver 400 for different clusters 500.

Hence, the performance statistics on certain clusters may be stored and exploited when forming new clusters.

For example, step 1 in the above process could be modified, such that the logical central unit generates clusters of TP based on information on the past TP clusters and on channel prediction based on channel statistic. Joint processing is assumed within each cluster.

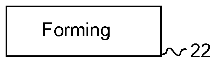

Fig. 3 shows a block diagram of an embodiment of a method for controlling transmission points 200, 210, 220, 230, 240, 250 in a mobile communication system 300. The mobile communication system 300 comprises a plurality of transmission points 200, 210, 220, 230, 240, 250 operable to communicate radio signals with a mobile transceiver 400. The method comprises forming 22 a cluster 500 of transmission points 200, 210, the cluster 500 of transmission points 200, 210 comprises multiple transmission points 200, 210, the transmission points 200, 210 of the cluster 500 using a common reference signal.

In line with the above, further embodiments of the method may comprise providing a common reference signal such that a joint radio channel, being established between the transmission points 200, 210 of the cluster 500 and a mobile transceiver 400, is measurable based on the common reference signal by the mobile transceiver 400. The method can comprise a further step of receiving information on a channel quality on the joint radio channel from the mobile transceiver 400. And the method may comprise a further step of scheduling the mobile transceiver 400 for data transmission between the mobile transceiver 400 and the cluster 500 of transmission points 200, 210 based on the information on the channel quality of the joint radio channel.

Embodiments may further provide a computer program having a program code for performing one of the above methods, when the computer program is executed on a computer or processor.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as magnetic disks and magnetic tapes, hard drives, or optically readable digital data storage media. The embodiments are also intended to cover computers programmed to perform said steps of the above-described methods or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing or to per-form a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for forming", "means for determining", "means for allocating", etc., may be provided through the use of dedicated hardware, such as "a former", "a determiner", "an allocator", etc. as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. An apparatus (10) for controlling transmission points (200; 210; 220; 230; 240; 250) in a mobile communication system (300), the mobile communication system (300) comprising a plurality of transmission points (200; 210; 220; 230; 240; 250) operable to communicate radio signals with a mobile transceiver (400), the apparatus (10) comprising
means for randomly forming (12) a plurality of clusters (500) of transmission points, a cluster (500) of transmission points comprising multiple transmission points (200; 210);
means for sending common reference signals by each transmission point in a cluster;
means for controlling the transmission points (200; 210; 220; 230; 240; 250) to indicate a cell identification by using the same scrambling sequence;
means for receiving mobile transceiver feedback information on the quality of the joint radio channel established by the transmission points (200; 210; 220; 230; 240; 250) of one cluster; and
means for scheduling users using the plurality of clusters (500) based on the feedback information.

2. The apparatus (10) of claim 1, wherein each of the transmission points (200; 210) of one cluster (500) uses a same cell identification.

3. The apparatus (10) of claim 1, further operable to control the transmission points (200; 210) such that the transmission points (200; 210) of one cluster appear as one radio cell to the mobile transceiver (400).

4. The apparatus (10) of claim 1, further operable to control the transmission points (200; 210) such that the transmission points (200; 210) provide the common reference signal such that a joint radio channel, being established between the transmission points (200; 210) of one cluster (500) and the mobile transceiver (400), is measurable based on the common reference signal by the mobile transceiver (400).

5. The apparatus (10) of claim 1, wherein the common reference signal corresponds to a cell-specific reference signal or a demodulation reference signal.

6. The apparatus (10) of claim 1, wherein the means for forming (12) the cluster of transmission points (200; 210) is operable to improve the plurality of the clusters based on information on a performance of one or more clusters which had been formed in the past.

7. The apparatus (10) of claim 6, wherein the means for forming (12) is operable to store information on a radio channel statistic for the cluster (500).

8. The apparatus (10) of claim 6, wherein the means for forming (12) is operable to store information on a performance of the mobile transceiver (400) for different clusters (500).

9. The apparatus (10) of claim 1, further operable to control the transmission points (200; 210) such that the transmission points (200; 210) of one cluster (500) are operable to communicate jointly with the mobile transceiver (400).

10. The apparatus (10) of claim 1, wherein the signals communicated between the transmission points (200; 210) of one cluster (500) and the mobile transceiver (400) are processed jointly.

11. A method for controlling transmission points (200; 210; 220; 230; 240; 250) in a mobile communication system (300), the mobile communication system (300) comprising a plurality of transmission points (200; 210; 220; 230; 240; 250) operable to communicate radio signals with a mobile transceiver (400), the method comprising
randomly forming (22) a plurality of clusters (500) of transmission points (200; 210), a cluster (500) of transmission points (200; 210) comprising multiple transmission points (200; 210);
sending common reference signals by each transmission point in a cluster;
controlling the transmission points (200; 210; 220; 230; 240; 250) to indicate a cell identification by using the same scrambling sequence;
receiving mobile transceiver feedback information on the quality of the joint radio channel established by the transmission points (200; 210; 220; 230; 240; 250) of one cluster; and
scheduling users using the plurality of clusters (500) based on the feedback information.

12. A computer program having a program code for performing the method of claim 11, when the computer program is executed on a computer or processor.

## Patentansprüche

1. Vorrichtung (10) zur Steuerung von Übertragungspunkten (200; 210; 220; 230; 240; 250) in einem mobilen Kommunikationssystem (300), wobei das mobile Kommunikationssystem (300) eine Vielzahl von Übertragungspunkten (200; 210; 220; 230; 240; 250) umfasst, die betriebsbereit sind für das Kommunizieren von Funksignalen mit einem mobilen Sendeempfänger (400), wobei die Vorrichtung (10) umfasst:
Mittel für das wahllose Bilden (12) einer Vielzahl von Clustern (500) von Übertragungspunkten, wobei ein Cluster (500) von Übertragungspunkten mehrere Übertragungspunkte (200; 210) umfasst;
Mittel für das Senden gemeinsamer Referenzsignale durch jeden Übertragungspunkt in einem Cluster;
Mittel für das Steuern der Übertragungspunkte (200; 210; 220; 230; 240; 250), um durch die Benutzung derselben Verwürfelungssequenz eine Zellkennung anzuzeigen;
Mittel für den Empfang von Rückmeldungsinformationen mobiler Sendeempfänger zur Qualität des gemeinsamen Funkkanals, der von den Übertragungspunkten (200; 210; 220; 230; 240; 250) eines Clusters eingerichtet wurde; und
Mittel für die Zeitplanung von Benutzern, welche die Vielzahl von Clustern (500) benutzen, auf der Grundlage der Rückmeldungsinformationen.

2. Die Vorrichtung (10) nach Anspruch 1, wobei jeder der Übertragungspunkte (200; 210) eines Clusters (500) dieselbe Zellkennung benutzt.

3. Die Vorrichtung (10) nach Anspruch 1, weiterhin betriebsbereit für das dergestalt erfolgende Steuern der Übertragungspunkte (200; 210), dass die Übertragungspunkte (200; 210) eines Clusters dem mobilen Sendeempfänger (400) als eine Funkzelle erscheinen.

4. Die Vorrichtung (10) nach Anspruch 1, weiterhin betriebsbereit für das dergestalt erfolgende Steuern der Übertragungspunkte (200; 210), dass die Übertragungspunkte (200; 210) das gemeinsame Referenzsignal dergestalt bereitstellen, dass ein gemeinsamer, zwischen den Übertragungspunkten (200; 210) eines Clusters (500) und dem mobilen Sendeempfänger (400) eingerichteter Funkkanal auf der Grundlage des gemeinsamen Referenzsignals durch den mobilen Sendeempfänger (400) messbar ist.

5. Die Vorrichtung (10) nach Anspruch 1, wobei das gemeinsame Referenzsignal einem zellspezifischen Referenzsignal oder einem Demodulations-Referenzsignal entspricht.

6. Die Vorrichtung (10) nach Anspruch 1, wobei das Mittel für das Bilden (12) des Clusters aus Übertragungspunkten (200; 210) betriebsbereit ist für das Verbessern der Vielzahl der Cluster auf der Grundlage von Informationen zum Leistungsverhalten eines oder mehrerer Cluster, die früher gebildet worden waren.

7. Die Vorrichtung (10) nach Anspruch 6, wobei das Mittel für das Bilden (12) betriebsbereit ist für das Speichern von Informationen zu einer Funkkanalstatistik für den Cluster (500).

8. Die Vorrichtung (10) nach Anspruch 6, wobei das Mittel für das Bilden (12) betriebsbereit ist für das Speichern von Informationen zu einem Leistungsverhalten des mobilen Sendeempfängers (400) für verschiedene Cluster (500).

9. Die Vorrichtung (10) nach Anspruch 1, weiterhin betriebsbereit für das dergestalt erfolgende Steuern der Übertragungspunkte (200; 210), dass die Übertragungspunkte (200; 210) eines Clusters (500) betriebsbereit sind für das gemeinsame Kommunizieren mit dem mobilen Sendeempfänger (400).

10. Die Vorrichtung (10) nach Anspruch 1, wobei die Signale, die zwischen den Übertragungspunkten (200; 210) eines Clusters (500) und dem mobilen Sendeempfänger (400) kommuniziert werden, zusammen verarbeitet werden.

11. Verfahren zur Steuerung von Übertragungspunkten (200; 210; 220; 230; 240; 250) in einem mobilen Kommunikationssystem (300), wobei das mobile Kommunikationssystem (300) eine Vielzahl von Übertragungspunkten (200; 210; 220; 230; 240; 250) umfasst, die betriebsbereit sind für das Kommunizieren von Funksignalen mit einem mobilen Sendeempfänger (400), wobei das Verfahren umfasst:
das wahllose Bilden (22) einer Vielzahl von Clustern (500) von Übertragungspunkten (200; 210), wobei ein Cluster (500) von Übertragungspunkten (200; 210) mehrere Übertragungspunkte (200; 210) umfasst;
das Senden gemeinsamer Referenzsignale durch jeden Übertragungspunkt in einem Cluster;
das Steuern der Übertragungspunkte (200; 210; 220; 230; 240; 250), um durch die Benutzung derselben Verwürfelungssequenz eine Zellkennung anzuzeigen;
den Empfang von Rückmeldungsinformationen mobiler Sendeempfänger zur Qualität des gemeinsamen Funkkanals, der von den Übertragungspunkten (200; 210; 220; 230; 240; 250) eines Clusters eingerichtet wurde; und
die Zeitplanung von Benutzern, welche die Vielzahl von Clustern (500) benutzen, auf der Grundlage der Rückmeldungsinformationen.

12. Ein Computerprogramm mit einem Programmcode zur Umsetzung des Verfahrens aus Anspruch 11, wenn das Computerprogramm auf einem Computer oder mit einem Prozessor ausgeführt wird.

## Revendications

1. Appareil (10) destiné à contrôler des points de transmission (200 ; 210 ; 220 ; 230 ; 240 ; 250) dans un système de communication mobile (300), le système de communication mobile (300) comprenant une pluralité de points de transmission (200 ; 210 ; 220 ; 230 ; 240 ; 250) permettant de réaliser une communication par signaux radio avec un émetteur-récepteur mobile (400), l'appareil (10) comprenant des moyens pour former aléatoirement (12) une pluralité de groupes (500) de points de transmission, un groupe (500) de points de transmission contenant de multiples points de transmission (200 ; 210) ;
des moyens pour envoyer des signaux de référence communs via chaque point de transmission d'un groupe ;
des moyens pour contrôler les points de transmission (200 ; 210 ; 220 ; 230 ; 240 ; 250) afin d'indiquer une identification de cellule en utilisant la même séquence d'embrouillage ;
des moyens pour recevoir des informations de retour de l'émetteur-récepteur mobile sur la qualité du canal radio commun établi par les points de transmission (200 ; 210 ; 220 ; 230 ; 240 ; 250) d'un groupe ; et
des moyens pour planifier les utilisateurs en utilisant la pluralité de groupes (500) en fonction des informations de retour.

2. Appareil (10) selon la revendication 1, dans lequel chacun des points de transmission (200; 210) d'un groupe (500) utilise une même identification de cellule.

3. Appareil (10) selon la revendication 1, permettant en outre de contrôler les points de transmission (200 ; 210) de telle façon que les points de transmission (200 ; 210) d'un groupe apparaissent comme une cellule radio pour l'émetteur-récepteur mobile (400).

4. Appareil (10) selon la revendication 1, permettant en outre de contrôler les points de transmission (200 ; 210) de telle façon que les points de transmission (200 ; 210) fournissent le signal de référence commun de telle sorte qu'un canal radio commun, établi entre les points de transmission (200 ; 210) d'un groupe (500) et l'émetteur-récepteur mobile (400), soit mesurable sur la base du signal de référence commun par l'émetteur-récepteur mobile (400).

5. Appareil (10) selon la revendication 1, dans lequel le signal de référence commun correspond à un signal de référence spécifique à une cellule ou un signal de référence de démodulation.

6. Appareil (10) selon la revendication 1, dans lequel les moyens destinés à la formation (12) du groupe de points de transmission (200 ; 210) permettent d'améliorer la pluralité des groupes sur la base d'informations sur les performances d'un ou plusieurs groupes qui ont été formés dans le passé.

7. Appareil (10) selon la revendication 6, dans lequel les moyens destinés à la formation (12) permettent de stocker des informations sur une statistique de canal radio pour le groupe (500).

8. Appareil (10) selon la revendication 6, dans lequel les moyens destinés à la formation (12) permettent de stocker des informations sur des performances de l'émetteur-récepteur mobile (400) pour différents groupes (500).

9. Appareil (10) selon la revendication 1, permettant en outre de contrôler les points de transmission (200 ; 210) de telle façon que les points de transmission (200 ; 210) d'un groupe (500) permettent de communiquer conjointement avec l'émetteur-récepteur mobile (400).

10. Appareil (10) selon la revendication 1, dans lequel les signaux transmis entre les points de transmission (200 ; 210) d'un groupe (500) et l'émetteur-récepteur mobile (400) sont traités conjointement.

11. Procédé destiné à contrôler des points de transmission (200 ; 210 ; 220 ; 230 ; 240 ; 250) dans un système de communication mobile (300), le système de communication mobile (300) comprenant une pluralité de points de transmission (200 ; 210 ; 220 ; 230 ; 240 ; 250) permettant de réaliser une communication par signaux radio avec un émetteur-récepteur mobile (400), le procédé comprenant les étapes suivantes ;
former aléatoirement (22) une pluralité de groupes (500) de points de transmission (200 ; 210), un groupe (500) de points de transmission (200 ; 210) contenant de multiples points de transmission (200 ; 210) ;
envoyer des signaux de référence communs via chaque point de transmission d'un groupe ;
contrôler les points de transmission (200; 210; 220; 230; 240; 250) afin d'indiquer une identification de cellule en utilisant la même séquence d'embrouillage ;
recevoir des informations de retour de l'émetteur-récepteur mobile sur la qualité du canal radio commun établi par les points de transmission (200 ; 210 ; 220 ; 230 ; 240 ; 250) d'un groupe ; et
planifier les utilisateurs en utilisant la pluralité de groupes (500) en fonction des informations de retour.

12. Programme informatique disposant d'un code de programme destiné à réaliser le procédé selon la revendication 11, lorsque le programme informatique est exécuté sur un ordinateur ou un processeur.
